(19) Europäisches Patentamt
European Patent Office
Office européen des brevets

(11) **EP 3 480 079 B1**

## (12) EUROPÄISCHE PATENTSCHRIFT

(45) Veröffentlichungstag und Bekanntmachung des Hinweises auf die Patenterteilung:
**07.07.2021 Patentblatt 2021/27**

(51) Int Cl.:
**B62D 5/04** *(2006.01)*     **B62D 6/08** *(2006.01)*

(21) Anmeldenummer: **18199769.3**

(22) Anmeldetag: **11.10.2018**

(54) **VERFAHREN UND VORRICHTUNG ZUM BETREIBEN EINER KRAFTFAHRZEUGFUNKTION**

METHOD AND DEVICE FOR OPERATING A MOTOR VEHICLE FUNCTION

PROCÉDÉ ET DISPOSITIF DE FONCTIONNEMENT D'UNE FONCTION DE VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.11.2017 DE 102017219467**

(43) Veröffentlichungstag der Anmeldung:
**08.05.2019 Patentblatt 2019/19**

(73) Patentinhaber: **VOLKSWAGEN AKTIENGESELLSCHAFT**
**38440 Wolfsburg (DE)**

(72) Erfinder:
• **Goering, Lars**
**31224 Peine (DE)**
• **Rüger, Tobias**
**38106 Braunschweig (DE)**
• **Dobberphul, Timo**
**38102 Braunschweig (DE)**

(56) Entgegenhaltungen:
**WO-A1-2016/208399     DE-A1-102011 106 900**
**DE-A1-102012 002 771     DE-A1-102013 209 459**
**DE-A1-102016 114 161**

**Beschreibung**

Technisches Gebiet

Die Erfindung betrifft Kraftfahrzeuge, insbesondere Kraftfahrzeuge, die mit autonomen Fahrfunktionen ausgestattet sind. Weiterhin betrifft die vorliegende Erfindung Verfahren zur Ermittlung von Parametern von Lenksystemen, die zur Wahrnehmung von autonomen Fahrfunktionen mit Lenkeingriffen notwendig sind.

Technischer Hintergrund

Zusehens greifen Fahrerassistenzfunktionen in Kraftfahrzeugen aktiv in das Lenksystem ein. Ein Großteil der Lenkeingriffe erfolgt zwar momentan lediglich zur Unterstützung der Lenkung des Kraftfahrzeugs durch den Fahrer, jedoch kann bei hochautomatisierten Fahrfunktionen auch eine vollständige Übernahme der Lenkung des Kraftfahrzeugs durch Fahrzeugfunktionen erfolgen. Dadurch wird es erforderlich, auch dynamische Lenkungseingriffe umzusetzen, ohne dass der Fahrer eingreifen muss.

Eine Beaufschlagung der Zahnstange, der Lenkwelle oder anderer Komponenten des Lenksystems durch einen elektromechanischen Lenkeingriff zur Umsetzung einer gewünschten Lenkbewegung führen jedoch ohne den dämpfenden Einfluss durch ein von dem Fahrer festgehaltenes Lenkrad dazu, dass deutlich sichtbare Schwingungen am Lenkrad auftreten können, die zu einem instabilen Fahrverhalten und im schlimmsten Fall zu einem Aufschwingen des Kraftfahrzeugs während einer Fahrt führen können. Maßgeblich ist, dass eine Lenkradanordnung aus Lenkrad und Lenkwelle einen Federschwinger bildet, dessen Dämpfung maßgeblich von einer Betätigung des Lenkrads durch die Hände des Fahrers abhängt.

Das Abfangen eines Aufschwingens der Lenkradanordnung kann durch eine geeignete Auslegung einer Positionsregelung zur Ansteuerung des elektromechanischen Lenkantriebs erreicht werden. Jedoch muss zur effektiven Schwingungsunterdrückung eine Kenntnis der Drehstabsteifigkeit und des Trägheitsmoments der Lenkradanordnung bestehen, die in der Regel fahrzeugindividuell sind, da insbesondere gleiche Fahrzeugtypen mit unterschiedlichen Lenkradkonfigurationen ausgestattet sein können.

Aus der Druckschrift DE 10 2006 038 692 A1 ist ein Verfahren zur Lenkwinkelkorrektur in einer Hilfskraftlenkung für ein Kraftfahrzeug vorgesehen, wobei ein Korrekturlenkmoment additiv einem Hilfsmoment mittels eines Elektromotors überlagert wird und in einen Lenkstrang zur Beeinflussung eines Radlenkwinkels eingeleitet wird. Das Korrekturlenkmoment wird abhängig von Massenträgheitsmomenten und Reibungskennwerten weiterer im Lenkstrang befindlicher Bauteile ermittelt. Alternativ kann die Lenkwinkelkorrektur mithilfe von ein- oder mehrdimensionalen Kennlinien durchgeführt werden, die von den Massenträgheitsmomenten und Reibungskennwerten abhängen.

Auch aus der Druckschrift DE 10 2013 218 246 A1 ist ein Verfahren zur Dämpfung einer Drehschwingung eines Lenkrads bekannt, wobei die Dämpfung mithilfe von Steuersignalen eingestellt werden kann, die u. a. abhängig von einem Trägheitsmoment des Lenkrads gewählt werden.

In dem oben angegebenen Stand der Technik wird das Trägheitsmoment der Lenkradanordnung aus dem Lenkrad und/oder der Lenkwelle als konstante Größe vorgegeben und beispielsweise bei Inbetriebnahme des Kraftfahrzeugs empirisch ermittelt. Durch die unterschiedlichen Möglichkeiten der Beaufschlagung der Lenkradanordnung durch den Fahrer und auch der Möglichkeit, dass der Fahrer das Lenkrad im autonomen Fahrbetrieb nicht festhält, können sich deutlich variierende Trägheitsmomente der Lenkradanordnung ergeben. Da herkömmliche Positionsregelungen für Lenksysteme nur ein festgelegtes Trägheitsmoment berücksichtigen, kann dies im ungünstigen Fall zu einem Überschwingen eines Lenkeingriffs führen.

Die Druckschrift WO2016/208399 A1 ist als nächstliegender Stand der Technik zu sehen und offenbart ein Verfahren und eine Vorrichtung, die in der Lage sind, um bei einer Lenkeingabe von einem Fahrer einen automatischen Lenkmodus schnell zu deaktivieren und in einen manuellen Lenkmodus umzuschalten, in dem das Lenken von einem Fahrer durchgeführt wird. Dadurch ist es möglich, eine Störung eines Verhaltens eines Fahrzeugs zu verhindern, die durch eine übermäßig starke Betätigung durch den Fahrer verursacht wird. In der Fahrzeuglenkvorrichtung wird ein Zustand, in dem ein Fahrer die Eingabeeinheit des Lenkeingabemittels hält, auf der Grundlage einer Kenngrößenänderung detektiert, die durch eine Erhöhung einer Masse oder eines Trägheitsmoments in der Eingabeeinheit des Lenkeingabemittels oder eines diesem untergeordneten Teils verursacht wird. Darüber hinaus wird ein Umschaltvorgang zwischen dem automatischen Lenkmodus und dem manuellen Lenkmodus auf der Grundlage eines Ergebnisses der Haltedetektion durchgeführt.

Die Druckschrift DE 10 2016 114 161 A1 offenbart ein System und ein Verfahren zum Bestimmen, ob ein Fahrer ein Fahrzeuglenkrad festhält. Das Fahrzeug umfasst ein elektrisches Servolenksystem und kann ferner autonome oder teilautonome Fahrmerkmale, wie etwa Spurzentrierungskontrolle oder Spurhalteunterstützung, umfassen. Das System umfasst eine passive Erkennungstechnik, die Lenkdrehmoment und Lenkwinkel überwacht, eine Resonanzfrequenz der Schwingung des Lenksystems aus den Messdaten bestimmt und die Resonanzfrequenz mit einer bekannten Eigenfrequenz des Lenksystems vergleicht, um eine Bestimmung des Aufliegens/Nicht-Aufliegens der Hände vorzunehmen. Falls die Ergebnisse der passiven Technik unter einer Konfidenzschwelle liegen, dann wird eine aktive Technik verwendet, die eine Lenkwinkelstörung bereitstellt und das Frequenzverhalten misst, wobei das Störsignal Kennzeichen aufweist, die basierend auf den Ergebnissen der passiven Technik vorgeschrieben sind. Ein Lenkdrehmoment, das größer als ein Schwellenwert ist, bedeutet auch, dass der Fahrer das Lenkrad festhält.

Die Druckschrift DE 10 2011 106 900 A1 offenbart ein Verfahren zur Erkennung einer Handbetätigung einer Lenkvorrichtung eines Kraftfahrzeugs. Zunächst werden Fahrzeugzustände, Fahrbetriebszustände sowie Verkehrszustände mittels Karten- und Verkehrsinformationen erfasst. Dann erfolgt ein Analysieren von Stellsignalen eines Fahrerassistenzsystems in Bezug auf eine ausreichende Größe von Lenkeingriffssignalen des Fahrerassistenzsystems zur Ermittlung eines Trägheitsmomentwerts des Lenksystems. Falls die ermittelten Lenkeingriffssignale des Fahrerassistenzsystems keine ausreichende Größe aufweisen, erfolgt ein Aufprägen einer Folge von Lenkeingriffssignalen auf das Lenksystem. Die aufgeprägten bzw. die Lenkeingriffssignale des Fahrerassistenzsystems werden in eine Schätzung von Trägheitsmomentwerten umgesetzt und geprüft, ob ein vorgegebener Grenzwertbereich von Trägheitsmomentwerten des Lenksystems unterschritten wird.

Es ist Aufgabe der vorliegenden Erfindung, eine Möglichkeit bereitzustellen, das Trägheitsmoment der Lenkradanordnung aus dem Lenkrad und der Lenkwelle zu bestimmen und ggfs. bei einer Lenkstellungsregelung zu berücksichtigen.

Offenbarung der Erfindung

Diese Aufgabe wird durch das Verfahren zum Betreiben einer Fahrzeugfunktion basierend auf einem Trägheitsmoment in einem Lenksystem gemäß Anspruch 1 sowie durch die Vorrichtung und ein Kraftfahrzeugsystem gemäß den nebengeordneten Ansprüchen gelöst. Weitere Ausgestaltungen sind in den abhängigen Ansprüchen angegeben.

Gemäß einem ersten Aspekt ist ein Verfahren zum Betreiben einer Fahrzeugfunktion basierend auf einer Eigenfrequenz und/oder einem Trägheitsmoment einer Lenkradanordnung in einem Lenksystem, mit folgenden Schritten:

- Vorgeben eines elektromotorischen Lenkeingriffs, um das Lenksystem durch Bereitstellen einer Lenkeingriffskraft oder eines Lenkeingriffsmoments zu bewegen;
- Ermitteln einer Eigenfrequenz und/oder eines Trägheitsmoments der Lenkradanordnung abhängig von der Reaktion der Lenkradanordnung aufgrund des elektromotorischen Lenkeingriffs;
- Betreiben der Fahrzeugfunktion basierend auf der ermittelten Eigenfrequenz und/oder dem ermittelten Trägheitsmoment der Lenkradanordnung,

wobei eine Lenkstellungsregelung basierend auf einem oder mehreren Regelungsparametern durchgeführt wird, wobei der eine oder die mehreren Regelungsparameter der ermittelten Eigenfrequenz und/oder dem Trägheitsmoment zugeordnet werden oder wobei der eine oder die mehreren Regelungsparameter basierend auf der Eigenfrequenz und/oder dem Trägheitsmoment errechnet werden.

Zur Durchführung von Fahrzeugfunktionen, die in die Lenkung eines Kraftfahrzeugs eingreifen, oder zur Ausführung von autonomen Fahrfunktionen, die für eine vorgegebene Zeitdauer die Lenkung eines Kraftfahrzeugs selbsttätig übernehmen, ist es notwendig, die Vorgabe von Lenkwinkeln oder Lenkmomenten möglichst genau umzusetzen. Insbesondere bei einer Lenkstellungsregelung, die einer Regelung von Lenkwinkeln entspricht, wird unter Vorgabe einer Soll-Lenkstellung ein Lenkantrieb so angesteuert, dass dieser die betreffende Lenkstellung schnellstmöglich unter Beachtung von jeweiligen Randbedingungen einnimmt bzw. anfährt. Es ist derzeit nicht möglich, bei vorgegebener hoher Dynamik eine Lenkstellungsregelung mit einer ausreichenden Regelgüte so auszulegen, dass ein Überschwingen auch bei variierenden Trägheitsmomenten vermieden wird. Insbesondere beim Loslassen des Lenkrads durch den Fahrer vermindert sich das Trägheitsmoment der Lenkradanordnung des Lenksystems erheblich, so dass diese bei automatischen Lenkeingriffen zum Überschwingen neigt. Daher ist es zur Durchführung der oben genannten Fahrzeugfunktionen notwendig, das tatsächliche Trägheitsmoment der Lenkradanordnung in angemessener Weise zur Ansteuerung des Lenksystems bzw. zur Durchführung eines Lenkeingriffs durch Fahrzeugfunktionen oder eine autonome Fahrfunktion zu berücksichtigen.

Die Eingriffe der meisten Fahrzeugfunktionen beschränken sich auf kurzzeitige Lenkempfehlungen, die dem Fahrer durch ein sich änderndes Handmoment am Lenkrad signalisiert werden. In der Regel hält der Fahrer dabei über die gesamte Dauer des Lenkeingriffs die Hände am Lenkrad. Durch die resultierende Dämpfung von Bewegungen der Lenkradanordnung muss die festgehaltene Lenkradanordnung noch nicht als schwingfähige Masse angesehen werden. Dagegen ist es vorgesehen, dass bei autonomen Fahrfunktionen, die selbstständig eine Lenkung ausführen sollen, der Fahrer die Hände nicht am Lenkrad behält, so dass die Dämpfung der Lenkradanordnung deutlich geringer ist. Insbesondere bei der Entwicklung, immer dynamischere Lenkstellungsregelungen zu implementieren, kommt mit der freischwingenden Lenkradanordnung eine unbekannte Größe dazu, die in der Lenkstellungsregelung berücksichtigt werden muss, da ansonsten die Lenkstellungsregelung instabil werden kann oder die gewünschte Dynamik nicht erreicht werden kann. Daher ermöglicht das obige Verfahren, die Trägheitsmomente der Lenkungsanordnung aus Lenkrad und Lenkwelle fahrzeugspezifisch zu bestimmen, um diese Informationen in der Lenkstellungsregelung berücksichtigen zu können.

Dazu sieht das obige Verfahren vor, zu vorgegebenen Zeitpunkten, z. B. bei Inbetriebnahme des Kraftfahrzeugs, bei einem Austausch von Lenkwelle und/oder Lenkrad und dergleichen oder in regelmäßigen Zeitabständen ein Trägheitsmoment zu bestimmen. Dazu kann von dem Lenkantrieb des Lenksystems ein elektromotorischer Lenkeingriff in Form eines Eingriffsmoments bzw. eines Eingriffsmomentenprofils in die Lenkung eingeprägt werden, der zu einer mechanischen Verstellung des Lenksystems führt. Dazu werden die Größen Winkelgeschwindigkeit und Winkelbeschleunigung des Lenkantriebs bzw. die davon abhängigen Größen des Lenksystems sowie das durch die Massenträgheit der Lenkradanordnung aus Lenkrad und Lenkwelle entstehende Lenkmoment, das mithilfe eines Handlenkmomentensensors an der Lenkwelle gemessen werden kann, bestimmt. Dadurch kann die Massenträgheit der Lenkradanordnung bestimmt werden. Die so bestimmte Massenträgheit kann im Folgenden für die Ausführung von Fahrzeugfunktionen, die Lenkeingriffe bewirken, und autonomen Lenkfunktionen berücksichtigt werden.

Auf diese Weise ist es möglich, fahrzeugindividuelle Konfigurationen von Lenkwelle und Lenkrad zu ermitteln, so dass diese für eine Fahrzeugfunktion und eine autonome Lenkfunktion berücksichtigt werden können. Dadurch kann eine empirische Bestimmung des Trägheitsmoments der Lenkradanordnung insbesondere außerhalb des Fahrzeugs vermieden werden, die aufwendig ist, und zum anderen kann das tatsächliche Trägheitsmoment genauer bestimmt werden.

Insbesondere können bei der Lenkstellungsregelung mindestens eine der Eigenfrequenzen der Lenkradanordnung insbesondere durch einen Totbandfilter ausgeblendet werden.

Es kann vorgesehen sein, dass eine elastische Verspannung der Lenkradanordnung aufgrund der Lenkeingriffskraft bzw. des Lenkeingriffsmoments gemessen und insbesondere durch den Verlauf eines Lenkradmoments bestimmt wird.

Insbesondere kann ein entsprechender Verlauf des Lenkradmoments durch einen Handlenkmomentensensor an der Lenkradanordnung gemessen werden.

Gemäß einer Ausführungsform kann der elektromotorische Lenkeingriff in Form eines Sprungverlaufs der Lenkeingriffskraft bzw. des Lenkeingriffsmoments oder als periodische Schwingung der Lenkeingriffskraft oder des Lenkeingriffsmoments vorgegeben werden.

Weiterhin kann die Eigenfrequenz durch Anregung mit sinusförmigen Lenkeingriffen mit unterschiedlichen Anregungsfrequenzen und durch Wahl derjenigen Anregungsfrequenz als Eigenfrequenz, bei der das Verhältnis der Bewegungsamplitude am Lenkrad zu der Bewegungsamplitude am Ritzel maximal ist, bestimmt werden.

Es kann vorgesehen sein, dass das Trägheitsmoment des Lenkrades basierend auf einem durch den Lenkeingriff eingebrachten Moment auf die Lenkradanordnung und einer resultierenden Winkelbeschleunigung der Lenkradanordnung bestimmt wird.

Gemäß einer Ausführungsform kann zur Ermittlung der Eigenfrequenz und/oder des Trägheitsmoments eine Sinusanregung oder eine Sprunganregung als Lenkeingriff eingebracht werden.

Es kann vorgesehen sein, dass das Ermitteln der Eigenfrequenz und/oder des Trägheitsmoments der Lenkradanordnung nur durchgeführt wird, wenn die Lenkradanordnung durch die Hände des Fahrers unbeaufschlagt ist.

Insbesondere kann festgestellt werden, dass die Lenkradanordnung durch die Hände des Fahrers unbeaufschlagt ist, indem eine Momentenbilanz an der Lenkradanordnung erstellt wird, wobei ein festgehaltenes Lenkrad erkannt wird, wenn ein Differenzmoment festgestellt wird.

Die Fahrzeugfunktion kann eine Fahrerassistenzfunktion, die einen Lenkeingriff vorsieht, oder eine autonome Fahrfunktion, die eine selbsttätige Lenkung vorsieht, umfassen. Gemäß einem weiteren Aspekt ist eine Vorrichtung zum Betreiben einer Fahrzeugfunktion basierend auf einer Eigenfrequenz oder einem Trägheitsmoment einer Lenkradanordnung in einem Lenksystem vorgesehen, mit folgenden Schritten:

-   Vorgeben eines elektromotorischen Lenkeingriffs, um das Lenksystem durch Bereitstellen einer Lenkeingriffskraft oder eines Lenkeingriffsmoments zu bewegen;
-   Ermitteln einer Eigenfrequenz und/oder eines Trägheitsmoments der Lenkradanordnung abhängig von der Reaktion der Lenkradanordnung aufgrund des elektromotorischen Lenkeingriffs;
-   Betreiben der Fahrzeugfunktion basierend auf der ermittelten Eigenfrequenz und/oder dem ermittelten Trägheitsmoment der Lenkradanordnung,

wobei eine Lenkstellungsregelung basierend auf einem oder mehreren Regelungsparametern durchgeführt wird, wobei der eine oder die mehreren Regelungsparameter der ermittelten Eigenfrequenz und/oder dem Trägheitsmoment zugeordnet werden oder wobei der eine oder die mehreren Regelungsparameter basierend auf der Eigenfrequenz und/oder dem Trägheitsmoment ermittelt werden.

Gemäß einem weiteren Aspekt ist ein Lenksystem mit einer Lenkradanordnung und mit der obigen Vorrichtung vorgesehen.

Kurzbeschreibung der Zeichnungen

Ausführungsformen werden nachfolgend anhand der beigefügten Zeichnungen näher erläutert. Es zeigen:

Figur 1    eine schematische Darstellung eines Kraftfahrzeugs mit einem Lenksystem; und

Figur 2    ein Flussdiagramm zur Veranschaulichung eines Verfahrens zum Durchführen einer Fahrzeugfunktion.

Beschreibung von Ausführungsformen

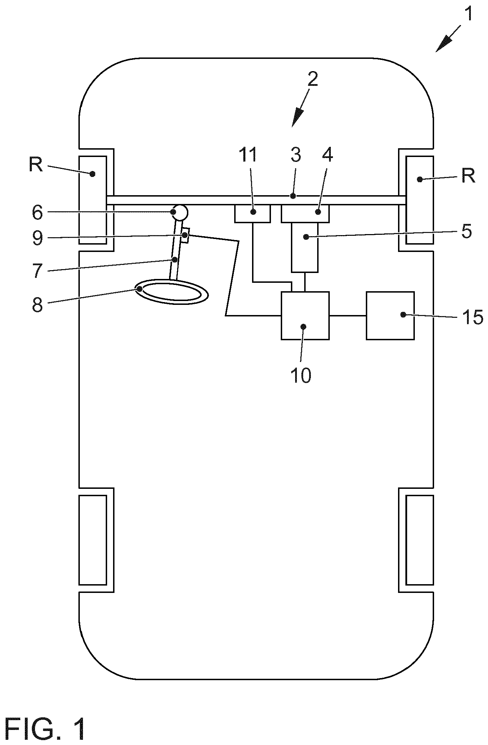

Figur 1 zeigt eine schematische Darstellung eines Kraftfahrzeugs 1 mit einem Lenksystem 2. Das Lenksystem 2 dient zum Einstellen eines Lenkwinkels von gelenkten Rädern R. Die gelenkten Räder R können über eine Lenkmechanik 3, die eine Zahnstange umfassen kann, gemäß einem Lenkwinkel für ein Lenken des Kraftfahrzeugs 1 ausgerichtet werden. Die Lenkungsmechanik 3 kann über ein Kopplungsgetriebe 4 mit einem Lenkantrieb 5 gekoppelt sein, um eine Lenkeingriffskraft auf die Zahnstange der Lenkmechanik 3 auszuüben. Der Lenkantrieb 5 kann beispielsweise als elektromotorischer Lenkantrieb vorgesehen sein.

Weiterhin ist die Lenkmechanik 3 über eine mechanische Lenkwellenkopplung 6 (Getriebe) mit einer Lenkradanordnung 12 gekoppelt. Die Lenkradanordnung 12 umfasst eine Lenkwelle 7 und ein am Ende der Lenkwelle 7 angeordnetes Lenkrad 8, über das ein Fahrer ein Handlenkmoment ausüben kann. Das Handlenkmoment kann über die Lenkmechanik 3 auf die gelenkten Räder 2 in eine Lenkbewegung umgesetzt werden. Der Lenkantrieb 5 kann alternativ auch über ein entsprechendes Kopplungsgetriebe an der Lenkwelle 7 angreifen und anstelle einer Lenkeingriffskraft ein Lenkeingriffsmoment als Lenkeingriff bereitstellen.

Die Lenkwelle 7 kann mit einem Handlenkmomentensensor 9 versehen sein, um im herkömmlichen Betrieb ein zwischen der Lenkwellenkopplung 6 und dem Lenkrad 8 ausgeübtes Lenkmoment zu erfassen und eine entsprechende Angabe an ein Lenkungssteuergerät 10 bereitzustellen.

Das Bereitstellen des Lenkeingriffs wird ebenfalls in geeigneter Weise durch das Lenkungssteuergerät 10 vorgegeben. Weiterhin kann eine Zahnstangenposition mithilfe eines Zahnstangenpositionssensors 11 erfasst werden und eine entsprechende Angabe an das Lenkungssteuergerät 10 bereitgestellt werden.

Das Lenkungssteuergerät 10 kann weiterhin mit einem Fahrzeugsteuergerät 15 verbunden sein, in dem Fahrzeugfunktionen, wie beispielsweise Fahrerassistenzfunktionen und/oder autonome Fahrfunktionen realisiert sein können. Entsprechend werden dem Lenkungssteuergerät 10 Lenkeingriffsvorgaben oder Sollvorgaben für eine Lenkstellungsregelung bereitgestellt.

In dem Lenkungssteuergerät 10 wird in der Regel eine Lenkstellungsregelung durchgeführt, die beispielsweise als PID-Regelung ausgebildet sein kann. Zur Durchführung einer Lenkstellungsregelung in dem Lenkungssteuergerät 10 ist es insbesondere bei zunehmender Dynamik der Lenkstellungsregelung notwendig, eine Eigenfrequenz und/oder das Trägheitsmoment des Lenksystems 2, insbesondere die Eigenfrequenz der Lenkradanordnung 12 und/oder des Lenksystems 2 und das Trägheitsmoment einer Lenkradanordnung 12 aus Lenkrad 8 und Lenkwelle 7, zu kennen und die Regelungsparameter der Lenkstellungsregelung entsprechend anzupassen. Die Regelungsparameter werden so festgelegt, dass bei einer vorgegebenen Lenkstellungsregelung und einem bekannten Trägheitsmoment ein Schwingen des Lenkrads 8 auch bei hohen Ist-/Soll-Abweichungen vermieden wird. Beispielsweise können der Eigenfrequenz und/oder dem Trägheitsmoment die Regelungsparameter zugeordnet sein, z. B. über eine Lookup-Tabelle.

Bei einem von dem Fahrer festgehaltenem Lenkrad 8 ist die Dämpfung einer Lenkradbewegung in der Regel so hoch, dass eine variierende Trägheit der Lenkradanordnung 12 nicht notwendigerweise in der Lenkstellungsregelung berücksichtigt werden muss. Dagegen ist es bei Fahrzeugfunktionen, die in die Lenkung des Kraftfahrzeugs 1 eingreifen, während das Lenkrad 8 nicht von den Händen des Fahrers beaufschlagt ist, bei entsprechend dynamischer Auslegung der Lenkstellungsregelung kritisch. In diesem Fall können aufgrund des erheblich verringerten Trägheitsmoments Überschwingungen bei einem fehlerhaft berücksichtigten Trägheitsmoment auftreten, die zu einem instabilen Lenkverhalten des Kraftfahrzeugs 1 führen können.

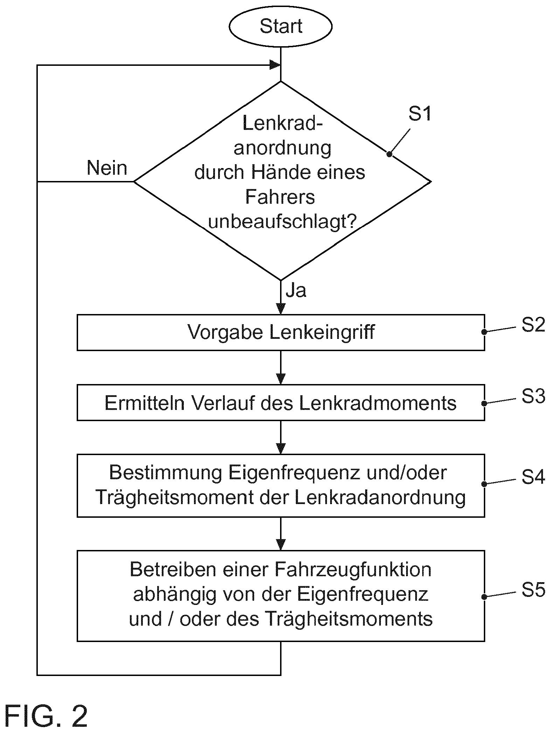

Somit ist es notwendig, fahrzeugindividuell ein Trägheitsmoment für eine Lenkradanordnung 12 zu bestimmen und dieses in geeigneter Weise für Lenkeingriffe oder Lenkwinkelvorgaben durch das Fahrzeugsteuergerät 15 zu berücksichtigen oder für die Lenkstellungsregelung in dem Lenkungssteuergerät 10 zu berücksichtigen. Dazu wird ein Verfahren ausgeführt, das in dem Flussdiagramm der Figur 2 veranschaulicht ist.

In Schritt S1 wird mithilfe an sich bekannter Verfahren zunächst überprüft, ob das Lenkrad 8 festgehalten ist (Hands-on) oder unbeaufschlagt (Hands-off), d. h. freidrehend, ist. Um zu erkennen, ob der Fahrer das Lenkrad 8 festhält, kann eine Hands-on-Erkennung durchgeführt werden. Dazu wird mithilfe einer Momentenbilanz geprüft, ob ein Differenzmoment an der Lenkradanordnung gewirkt hat.

Die Momentenbilanz ergibt sich aus einem mithilfe des Handlenkmomentensensors 9 gemessenen Sensormoment $M_{sensor}$ und dem Trägheitsmoment $M = J_{Hands\text{-}off} \cdot \ddot{\phi}$ der unbeaufschlagten Lenkradanordnung 12. Es wird basierend auf der Winkelbeschleunigung $\ddot{\phi}$ ermittelt, ob das Differenzmoment

$$\Delta M = M_{Sensor} - J_{Hands-off} \cdot \ddot{\phi}$$

ungleich 0 ist. Wenn festgestellt wird, dass das Differenzmoment $\Delta M$ ungleich 0 ist, wird auf ein Festhalten des Lenkrads 8 durch den Fahrer geschlossen.

Ist das Lenkrad 8 unbeaufschlagt (Alternative: Ja), so wird das Verfahren mit Schritt S2 fortgesetzt, andernfalls (Alternative: Nein) zu Schritt S1 zurückgesprungen. Es wird dann keine Trägheitsmomentenbestimmung durchgeführt, da für eine Trägheitsmomentenbestimmung ein Zustand der Lenkradanordnung 12 berücksichtigt werden muss, bei dem eine geringstmögliche Dämpfung auftritt.

In Schritt S2 wird ein elektromotorischer Lenkeingriff vorgegeben, um das Lenksystem 2 durch die Lenkeingriffskraft bzw. das Lenkeingriffsmoment zu bewegen. Dies kann durch Vorgabe eines Kraft- bzw. Momentenverlaufs für den Lenkantrieb 5 durch Vorgabe einer Sollgeschwindigkeit für die Verstellung des Lenksystems 2 oder die Vorgabe einer Sollposition an die Lenkstellungsregelung in der Lenkungssteuereinheit 10 erfolgen. Ziel ist es, ein Beschleunigungsverhalten im Lenksystem 2 hervorzurufen, durch die die Lenkradanordnung 12 mithilfe des Lenkantriebs 5 gestellt oder verstellt wird.

In Schritt S3 wird ein entsprechender Verlauf eines Lenkradmoments durch den Handlenkmomentensensor 9 gemessen, der aus dem Lenkeingriff des Schritts S2 resultiert. Durch die dynamische Positionsänderung der Lenkmechanik 3 wird die Lenkradanordnung 12 elastisch verspannt. Da die Lenkradanordnung 12 unbeaufschlagt ist, und entsprechend kein Gegenmoment wirkt, wird auch das Lenkrad 8 entsprechend beschleunigt und die Lenkwelle 7 entspannt sich. Die Lenkradanordnung 12 beginnt zu pendeln bzw. zu schwingen.

In Schritt S4 kann anhand des gemessenen Verlaufs des Lenkradmoments durch den Handlenkmomentensensor 9 die Eigenfrequenz und das Trägheitsmoment ermittelt werden.

Die Eigenfrequenz kann ermittelt werden, indem die Lenkradanordnung 12 als Einmassenschwinger angenommen wird. Bei einem als feststehend angenommenen Lenkritzel kann das Lenkrad 8 zusammen mit der Lenkwelle 7 als Federmassenschwinger angesehen werden. Hierbei handelt es sich um ein schwingungsfähiges System, dessen rotatorische Bewegung um die Lenkachse erfolgt.

Beim Bilden des Kräftegleichgewichts für einen Einmassenschwinger ergibt sich folgende Differentialleichung.

$$m\ddot{x}(t) + d\dot{x}(t) + kx(t) = 0$$

Aus der Lösung der Differentialgleichung bei d=0 ergibt sich eine Eigenkreisfrequenz $\omega_0^2 = \frac{k}{m}$.

$$f = \frac{1}{2\pi}\sqrt{\frac{k}{m}},$$

Dies entspricht einer Eigenfrequenz von wobei m einer Masse, d einer Dämpfungskonstanten, k einer Federkonstanten x einer Auslenkung, t der Zeit, $\omega_0^2$ der Eigenkreisfrequenz der ungedämpften Schwingung und f einer Frequenz entsprechen.

Als Eingangsgrößen entsprechen somit J dem Trägheitsmoment der Lenkradanordnung 12, D einem Direktionsmoment, das einer Torsionssteifigkeit des Drehstabes entspricht, und $\phi$ einer Auslenkung (Verdrehung des Drehstabes).

Wird das Momentengleichgewicht für den Aufbau gebildet, ergibt sich folgende Differentialgleichung.

$$J\ddot{\phi}(t) + D\phi(t) = 0$$

Ohne Dämpfung erhält man beim Lösen der Gleichung schließlich wieder den Term $\omega_0^2 = \frac{D}{J}$. Dies entspricht einer Eigenfrequenz von $f = \frac{1}{2\pi}\sqrt{\frac{D}{J}}$

Weiterhin gilt:

$$M = J \cdot \ddot{\phi}$$

wobei J dem Trägheitsmoment der Lenkradanordnung 12, M dem Drehmoment und $\ddot{\phi}$ der Winkelbeschleunigung entsprechen.

Das Verhältnis von der Anregung durch den elektromotorischen Lenkeingriff zur aktuellen Schwingung der Lenkradanordnung 12 an einer von dem Kopplungspunkt des Lenkantriebs entfernten Stelle ermöglicht somit eine Ermittlung der Eigenfrequenz des Lenksystems 2. Anhand einer bekannten Lenkwellensteifigkeit kann aus der Eigenfrequenz das Trägheitsmoment der Lenkradanordnung 12 ermittelt werden.

Im Detail werden dazu Lenkwinkel und Winkelgeschwindigkeit am Lenkrad durch das bekannte Sensormoment und der Federsteifigkeit von Lenksäule und Drehstab bestimmt. Die Eigenfrequenz kann durch Anregung mit sinusförmigen Zahnstangenbewegungen ermittelt werden. Insbesondere können sinusförmige Zahnstangenbewegungen mit unterschiedlichen Anregungsfrequenzen durch den entsprechenden Lenkeingriff angelegt werden. Die Verhältnisse der Amplituden am Lenkrad zur Amplituden am Ritzel werden miteinander verglichen. Bei Erreichen der Eigenfrequenz kommt es zur Resonanz, und das Verhältnis wird maximal. Somit kann diejenige Anregungsfrequenz, bei der sich ein maximales Verhältnis einstellt, als Eigenfrequenz angenommen werden. Die so ermittelte Eigenfrequenz kann mit der oben genannten Formel in ein Trägheitsmoment umgerechnet werden.

Das Trägheitsmoment des Lenkrades 8 kann aus dessen Beschleunigungsverhalten ermittelt werden. Bei einer beliebigen Anregung von der Zahnstange kommt es zu einer Verdrehung der Lenkradanordnung 12. Diese Verdrehung wiederum bringt ein Moment auf Lenkwelle 7 und Lenkrad 8 auf. Das Moment führt zu einer Winkelbeschleunigung. Das Verhältnis zwischen Winkelbeschleunigung und Moment ist durch die Formel $M = J \cdot \ddot{\phi}$ definiert und ermöglicht somit das Berechnen des Trägheitsmomentes.

Zu Ermittlung des Trägheitsmoments können beliebige Anregungen, wie z. B. unterschiedliche Sinusanregungen der Zahnstangengeschwindigkeit oder eine nahezu sprunghafte Änderung der Zahnstangengeschwindigkeit/Zahnstangenbeschleunigung sein. Bei einer kontinuierlichen Anregung ist es möglich mehrere Messungen durchzuführen und einen Mittelwert für das Trägheitsmoment zu bestimmen.

Die so ermittelten Parameter, nämlich die Eigenfrequenz und das Trägheitsmoment der Lenkradanordnung 12, können nun in Schritt S5 in dem Lenkungssteuergerät 10 zum Betreiben einer Fahrzeugfunktion verwendet werden. Beispielsweise können die ermittelten Parameter für eine Lenkstellungsregelung berücksichtigt werden.

Die Berücksichtigung kann durch Zuordnung von Regelungsparameter der Lenkstellungsregelung zu der ermittelten Eigenfrequenz und Trägheitsmoment erfolgen oder die Regelungsparameter können basierend auf der Eigenfrequenz und dem Trägheitsmoment errechnet werden.

Bei der Regelung auf eine Zahnstangenposition können kritische Eigenfrequenzen des Lenkrades 8 ausgeblendet werden. Dazu kann die Sollposition durch eine Filterung so verändert werden, dass die kritischen Eigenfrequenzen des Lenkrades 8 stark gedämpft werden (z. B. durch Totbandfilter). Ein Aufschwingen des Lenkrades 8 wird somit bei starken Beschleunigungen im Lenksystem 2 verhindert.

Weiterhin kann die Lenkstellungsregelung auf eine Sollposition mit zusätzlicher Vorsteuerung durchgeführt werden, um ein Schwingen des Lenkrades 8 auszugleichen. Im Positionsregler werden Abbrems- und Beschleunigungsphasen in der Sollgröße erkannt. Die Sollposition kann dazu in der Lenkstellungsregelung um ein zusätzliches Offset versehen werden. Dieser Offset entspricht dem Winkeloffset, der erforderlich ist, um mithilfe des Torsionsmoments das Lenkrad 8 mit dem zuvor berechneten Wert zu beschleunigen.

**Bezugszeichenliste**

1    Kraftfahrzeug
2    Lenksystem
3    Zahnstange
4    Kopplungsgetriebe
5    Lenkeingriffsmotor
6    Kopplung
7    Lenkwelle
8    Lenkrad
9    Handlenkmomentensensor
10   Lenkungssteuergerät
11   Lenkwinkelsensor
12   Lenkradanordnung
15   Fahrzeugsteuergerät

R    gelenkte Räder

**Patentansprüche**

1. Verfahren zum Betreiben einer Fahrzeugfunktion basierend auf einer Eigenfrequenz und/oder einem Trägheitsmoment einer Lenkradanordnung (12) in einem Lenksystem (2), mit folgenden Schritten:

   - Vorgeben (S2) eines elektromotorischen Lenkeingriffs, um das Lenksystem (2) durch Bereitstellen einer Lenkeingriffskraft oder eines Lenkeingriffsmoments zu bewegen;
   - Ermitteln (S4) einer Eigenfrequenz und/oder eines Trägheitsmoments der Lenkradanordnung (12) abhängig von der Reaktion der Lenkradanordnung (12) aufgrund des elektromotorischen Lenkeingriffs;
   - Betreiben (S5) der Fahrzeugfunktion basierend auf der ermittelten Eigenfrequenz und/oder dem ermittelten Trägheitsmoment der Lenkradanordnung (12),

   **dadurch gekennzeichnet, dass** eine Lenkstellungsregelung basierend auf einem oder mehreren Regelungsparameter durchgeführt wird, wobei der eine oder die mehreren Regelungsparameter der ermittelten Eigenfrequenz und/oder dem Trägheitsmoment zugeordnet werden oder wobei der eine oder die mehreren Regelungsparameter basierend auf der Eigenfrequenz und/oder dem Trägheitsmoment ermittelt werden.

2. Verfahren nach Anspruch 1, wobei bei der Lenkstellungsregelung mindestens eine der Eigenfrequenzen der Lenkradanordnung (12) insbesondere durch einen Totbandfilter ausgeblendet wird.

3. Verfahren nach einem der Ansprüche 1 bis 2, wobei eine elastische Verspannung der Lenkradanordnung (12) aufgrund der Lenkeingriffskraft bzw. des Lenkeingriffsmoments gemessen wird und insbesondere durch den Verlauf eines Lenkradmoments bestimmt wird.

4. Verfahren nach Anspruch 3, wobei ein entsprechender Verlauf des Lenkradmoments durch einen Handlenkmomentensensor (9) an der Lenkradanordnung (12) gemessen wird.

5. Verfahren nach einem der Ansprüche 1 bis 4, wobei der elektromotorische Lenkeingriff als Sprungverlauf der Lenkeingriffskraft bzw. des Lenkeingriffsmoments oder als periodische Schwingung der Lenkeingriffskraft oder des Lenkeingriffsmoments vorgegeben wird.

**6.** Verfahren nach einem der Ansprüche 1 bis 5, wobei die Eigenfrequenz durch Anregung mit sinusförmigen Lenkeingriffen mit unterschiedlichen Anregungsfrequenzen und durch Wahl derjenigen Anregungsfrequenz als Eigenfrequenz, bei der das Verhältnis der Bewegungsamplitude am Lenkrad zu der Bewegungsamplitude am Ritzel maximal ist, bestimmt wird.

**7.** Verfahren nach einem der Ansprüche 1 bis 6, wobei das Trägheitsmoment der Lenkradanordnung (12) basierend auf einem durch den Lenkeingriff eingebrachten Moment auf die Lenkradanordnung (12) und einer resultierenden Winkelbeschleunigung der Lenkradanordnung (12) bestimmt wird.

**8.** Verfahren nach Anspruch 7, wobei zur Ermittlung der Eigenfrequenz und/oder des Trägheitsmoments eine Sinusanregung oder eine Sprunganregung als Lenkeingriff eingebracht wird.

**9.** Verfahren nach einem der Ansprüche 1 bis 8, wobei das Ermitteln der Eigenfrequenz und/oder des Trägheitsmoments der Lenkradanordnung (12) nur durchgeführt wird, wenn die Lenkradanordnung (12) durch die Hände des Fahrer unbeaufschlagt ist.

**10.** Verfahren nach Anspruch 9, wobei festgestellt wird, dass die Lenkradanordnung (129 durch die Hände des Fahrer unbeaufschlagt ist, indem eine Momentenbilanz an der Lenkradanordnung (12) erstellt wird, wobei ein unbeaufschlagtes Lenkrad (8) erkannt wird, wenn ein Differenzmoment ($\Delta M$) festgestellt wird.

**11.** Verfahren nach einem der Ansprüche 1 bis 10, wobei die Fahrzeugfunktion eine Fahrerassistenzfunktion, die einen Lenkeingriff vorsieht, oder eine autonome Fahrfunktion, die eine selbsttätige Lenkung vorsieht, umfasst.

**12.** Vorrichtung zum Betreiben einer Fahrzeugfunktion basierend auf einer Eigenfrequenz und/oder einem Trägheitsmoment einer Lenkradanordnung (12) in einem Lenksystem (2), wobei die Vorrichtung ausgebildet ist zum:

- Vorgeben (S2) eines elektromotorischen Lenkeingriffs, um das Lenksystem (2) durch Bereitstellen einer Lenkeingriffskraft oder eines Lenkeingriffsmoments zu bewegen;
- Ermitteln (S4) einer Eigenfrequenz und/oder eines Trägheitsmoments der Lenkradanordnung (12) abhängig von der Reaktion der Lenkradanordnung (12) aufgrund des elektromotorischen Lenkeingriffs;
- Betreiben (S5) der Fahrzeugfunktion basierend auf der ermittelten Eigenfrequenz und/oder dem ermittelten Trägheitsmoment der Lenkradanordnung (12),
- **dadurch gekennzeichnet, dass** die Vorrichtung weiterhin ausgebildet ist, um eine Lenkstellungsregelung basierend auf einem oder mehreren Regelungsparameter durchzuführen, wobei der eine oder die mehreren Regelungsparameter der ermittelten Eigenfrequenz und/oder dem Trägheitsmoment zugeordnet werden oder wobei der eine oder die mehreren Regelungsparameter basierend auf der Eigenfrequenz und/oder dem Trägheitsmoment ermittelt werden.

**13.** Lenksystem mit einer Lenkradanordnung (12) und mit einer Vorrichtung nach Anspruch 12.

## Claims

**1.** Method for operating a vehicle function based on a natural frequency and/or a moment of inertia of a steering wheel assembly (12) in a steering system (2), comprising the following steps:

- Specifying (S2) an electromotoric steering intervention in order to move the steering system (2) by providing a steering intervention force or a steering intervention torque;
- Determining (S4) a natural frequency and/or a moment of inertia of the steering wheel assembly (12) depending on the response of the steering wheel assembly (12) due to the electromotoric steering intervention;
- Operating (S5) the vehicle function based on the determined natural frequency and/or the determined moment of inertia of the steering wheel assembly (12),

**characterized in that**
a steering position adjustment is performed on the basis of one or more control parameters, wherein the one or more control parameters are associated with the determined natural frequency and/or the moment of inertia, or wherein the one or more control parameters are determined based on the natural frequency and/or the moment of inertia.

**2.** Method according to Claim 1, wherein at least one of the natural frequencies of the steering wheel assembly (12) is suppressed in particular by a deadband filter during the steering position adjustment.

**3.** Method according to either of Claims 1 to 2, wherein an elastic tension of the steering wheel assembly (12) is measured on the basis of the steering intervention force or the steering intervention torque and is determined in particular by the course of a steering wheel torque.

4. Method according to Claim 3, wherein a corresponding course of the steering wheel torque is measured by a hand-steering torque sensor (9) on the steering wheel assembly (12).

5. Method according to any one of Claims 1 to 4, wherein the electromotoric steering intervention is prespecified as a jump in the course of the steering intervention force or of the steering intervention torque or as a periodic oscillation of the steering intervention force or the steering intervention torque.

6. Method according to any one of Claims 1 to 5, wherein the natural frequency is determined by excitation with sinusoidal steering interventions with different excitation frequencies and by selecting the excitation frequency as natural frequency at which the ratio of the movement amplitude at the steering wheel to the movement amplitude at the pinion is maximum.

7. Method according to any one of Claims 1 to 6, wherein the moment of inertia of the steering wheel assembly (12) is determined on the basis of a torque applied by the steering intervention to the steering wheel assembly (12) and a resulting angular acceleration of the steering wheel assembly (12).

8. Method according to Claim 7, wherein a sinusoidal excitation or a jump excitation is introduced as a steering intervention in order to determine the natural frequency and/or the moment of inertia.

9. Method according to any one of Claims 1 to 8, wherein the determination of the natural frequency and/or the moment of inertia of the steering wheel assembly (12) is carried out only when there is no input on the steering wheel assembly (12) by the hands of the driver.

10. Method according to Claim 9, wherein it is determined that there is no input on the steering wheel assembly (12) by the hands of the driver by establishing a torque balance on the steering wheel assembly (12), wherein no input on the unloaded steering wheel (8) is determined when a differential torque ($\Delta M$) is detected.

11. Method according to any one of Claims 1 to 10, wherein the vehicle function comprises a driver assistance function providing steering intervention or an autonomous driving function providing automatic steering.

12. Device for operating a vehicle function based on a natural frequency and/or a moment of inertia of a steering wheel assembly (12) in a steering system (2), wherein the device is designed for:

- specifying (S2) an electromotoric steering intervention to move the steering system (2) by providing a steering intervention force or a steering intervention torque;
- determining (S4) a natural frequency and/or a moment of inertia of the steering wheel assembly (12) depending on the response of the steering wheel assembly (12) due to the electromotoric steering intervention;
- operating (S5) the vehicle function based on the determined natural frequency and/or the determined moment of inertia of the steering wheel assembly (12),

**characterized in that**
the device is further configured to perform a steering position adjustment based on one or more control parameters, wherein the one or more control parameters are associated with the determined natural frequency and/or the moment of inertia, or wherein the one or more control parameters are determined based on the natural frequency and/or the moment of inertia.

13. Steering system comprising a steering wheel assembly (12) and a device according to Claim 12.

**Revendications**

1. Procédé de fonctionnement d'une fonction de véhicule basée sur une fréquence propre et/ou un moment d'inertie d'un dispositif de volant de direction (12) dans un système de direction (2), comprenant les étapes suivantes :

- prédéfinition (S2) d'une intervention de direction électromotrice, pour déplacer le système de direction (2) par la fourniture d'une force d'intervention de direction ou d'un moment d'intervention de direction ;
- détermination (S4) d'une fréquence propre et/ou d'un moment d'inertie du dispositif de volant de direction (12) dépendant de la réaction du dispositif de volant de direction (12) sur la base de l'intervention de direction électromotrice ;
- fonctionnement (S5) de la fonction de véhicule basée sur la fréquence propre déterminée et/ou le moment d'inertie déterminé du dispositif de volant de direction (12),

**caractérisé en ce**
qu'une régulation de position de direction basée sur un ou plusieurs paramètres de régulation est effectuée, le ou les paramètres de régulation étant associés à la fréquence propre déterminée et/ou au moment d'inertie déterminé ou le ou les paramètres de régulation étant déterminés sur la base de la fréquence propre et/ou du moment d'inertie.

2. Procède selon la revendication 1, dans lequel lors la régulation de position de direction au moins une des fréquences propres du dispositif de volant de direction (12) est masquée en particulier par un filtre de bande morte.

3. Procédé selon l'une quelconque des revendications 1 à 2, dans lequel une tension élastique du dispositif de volant de direction (12) est mesurée sur la base de la force d'intervention de direction ou du moment d'intervention de direction et en particulier est déterminée par le tracé d'un moment de volant de direction.

4. Procédé selon la revendication 3, dans lequel un tracé correspondant du moment de volant de direction est mesuré par un capteur de moment de direction manuelle (9) sur le dispositif de volant de direction (12).

5. Procédé selon l'une quelconque des revendications 1 à 4, dans lequel l'intervention de direction électromotrice est prédéfinie comme tracé d'impulsion de la force d'intervention de direction ou du moment d'intervention de direction ou comme oscillation périodique de la force d'intervention de direction ou du moment d'intervention de direction.

6. Procédé selon l'une quelconque des revendications 1 à 5, dans lequel la fréquence propre est déterminée par excitation avec des interventions de direction sinusoïdales avec différentes fréquences d'excitation et par sélection comme fréquence propre de la fréquence d'excitation pour laquelle le rapport de l'amplitude de mouvement au niveau du volant de direction à l'amplitude de mouvement au niveau du pignon est maximal.

7. Procédé selon l'une quelconque des revendications 1 à 6, dans lequel le moment d'inertie du dispositif de volant de direction (12) est déterminé sur la base d'un moment appliqué par l'intervention de direction sur le dispositif de volant de direction (12) et d'une accélération angulaire du dispositif de volant de direction (12) en résultant.

8. Procédé selon la revendication 7, dans lequel une excitation sinusoïdale ou une excitation par impulsion est appliquée comme intervention de direction pour la détermination de la fréquence propre et/ou du moment d'inertie.

9. Procédé selon l'une quelconque des revendications 1 à 8, dans lequel la détermination de la fréquence propre et/ou du moment d'inertie du dispositif de volant de direction (12) n'est réalisée que lorsque le dispositif de volant de direction (12) n'est pas sollicité par les mains du conducteur.

10. Procédé selon la revendication 9, dans lequel il est constaté que le dispositif de volant de direction (129 n'est pas sollicité par les mains du conducteur, en générant un bilan de moments du dispositif de volant de direction (12), un volant de direction (8) non sollicité étant reconnu lorsqu'un moment différentiel ($\Delta M$) est constaté.

11. Procédé selon l'une quelconque des revendications 1 à 10, dans lequel la fonction de véhicule comprend une fonction d'assistance au conducteur, qui prévoit une intervention de direction ou une fonction de conduite autonome, qui prévoit une direction autonome.

12. Dispositif de fonctionnement d'une fonction de véhicule basée sur une fréquence propre et/ou un moment d'inertie d'un dispositif de volant de direction (12) dans un système de direction (2), le dispositif étant conçu pour :

  - la prédéfinition (S2) d'une intervention de direction électromotrice, pour déplacer le système de direction (2) par la fourniture d'une force d'intervention de direction ou d'un moment d'intervention de direction ;
  - la détermination (S4) d'une fréquence propre et/ou d'un moment d'inertie du dispositif de volant de direction (12) dépendant de la réaction du dispositif de volant de direction (12) sur la base de l'intervention de direction électromotrice ;
  - le fonctionnement (S5) de la fonction de véhicule basée sur la fréquence propre déterminée et/ou le moment d'inertie déterminé du dispositif de volant de direction (12),

**caractérisé en ce**
**que** le dispositif est en outre conçu pour effectuer une régulation de position de direction basée sur un ou plusieurs paramètres de régulation, le ou les paramètres de régulation étant associés à la fréquence propre déterminée et/ou au moment d'inertie déterminé ou le ou les paramètres de régulation étant déterminés sur la base de la fréquence propre et/ou du moment d'inertie.

13. Système de direction comprenant un dispositif de volant de direction (12) et un dispositif selon la revendication 12.

FIG. 1

```
                        ┌─────────────┐
                        │    Start    │
                        └──────┬──────┘
                               │
                               ▼
                        ╱╲           S1
                      ╱     ╲      ·
           Nein    ╱  Lenkrad-  ╲
        ◄─────────╱  anordnung    ╲
                  ╲ durch Hände eines ╱
                    ╲   Fahrers    ╱
                      ╲unbeaufschlagt?╱
                        ╲         ╱
                          ╲     ╱
                            ╲ ╱
                             │ Ja
                             ▼
      ┌────────────────────────────────────┐   S2
      │        Vorgabe Lenkeingriff        │·─
      └─────────────────┬──────────────────┘
                        ▼
      ┌────────────────────────────────────┐   S3
      │  Ermitteln Verlauf des Lenkradmoments │·─
      └─────────────────┬──────────────────┘
                        ▼
      ┌────────────────────────────────────┐
      │  Bestimmung Eigenfrequenz und/oder  │   S4
      │ Trägheitsmoment der Lenkradanordnung│·─
      └─────────────────┬──────────────────┘
                        ▼
      ┌────────────────────────────────────┐
      │   Betreiben einer Fahrzeugfunktion  │   S5
      │    abhängig von der Eigenfrequenz   │·─
      │  und / oder des Trägheitsmoments    │
      └─────────────────┬──────────────────┘
```

FIG. 2

**IN DER BESCHREIBUNG AUFGEFÜHRTE DOKUMENTE**

**In der Beschreibung aufgeführte Patentdokumente**

- DE 102006038692 A1
- DE 102013218246 A1
- WO 2016208399 A1
- DE 102016114161 A1
- DE 102011106900 A1